# EUROPEAN PATENT APPLICATION

(11) **EP 3 719 431 A2**
(43) Date of publication of application: **07.10.2020**
(21) Application number: 20164368.1
(22) Date of filing: 19.03.2020
(51) Int. Cl.: F28D 1/053

(54) **CHARGE AIR COOLER**

(30) Priority: 22.03.2019 US 201962822561 P
(71) Applicant: Modine Manufacturing Company, Racine, Wisconsin 53403-2552 (US)
(72) Inventor: Saxby, Paul, Oak Creek, WI 53154 (US); Janke, David E., Racine Wisconsin, 53402 (US); Vratarics, Kornel, 3300 Eger (HU); Grotophorst, Thomas R., Muskego Wisconsin, 53150 (US)
(74) Representative: Clark, Mitchell James

(57) **Abstract**

A charge air cooler includes a battery of round tubes that extend between a first header plate and a second header plate arranged at a first end and a second end, respectively, of the charge air cooler. Stresses in corner tubes caused by differential thermal expansion between the tubes and side plates of the charge air cooler are reduced by having a reduced thickness over a portion of the header plates, or by directing a portion of the coolant through the side plates, or both.

## Description

### CROSS-REFERENCE TO RELATED PATENT APPLICATIONS

This application claims priority to United States Provisional Patent Application No. 62/822,561 filed on March 22, 2019, the entire contents of which are hereby incorporated by reference herein.

### BACKGROUND

The power density of a combustion engine can be increased by operating the engine at elevated pressures, enabling a greater mass of air and fuel to be present in a combustion cylinder of a given swept volume. In order to maintain the elevated operating pressure, the pressure of the incoming combustion air (referred to as "charge air") must be increased from ambient pressure. This is commonly done by extracting pressure energy from the elevated-pressure waste exhaust gases in a turbine and using that energy to compress the incoming charge air, a process known as turbocharging. This tends to also substantially increase the temperature of the charge air, both through thermodynamic inefficiencies in the compression process and through the transfer of heat from the high-temperature exhaust gases to the cooler charge air.

It can be desirable to reduce the temperature of the compressed charge air for several reasons. First, operating the engine with high-temperature charge air can lead to increased formation of undesirable pollutants in the engine exhaust. Second, the lower density of air at elevated temperature leads to a decrease in the mass of air and fuel that can be delivered to the engine in the intake stroke, thereby offsetting some of the benefits that are sought through operation at higher pressures. Consequently, it has become commonplace to pass the compressed charge air through a charge air cooler in order to cool the compressed charge air prior to delivering it to the engine.

The charge air cooler is a heat exchanger through which the compressed charge air passes while a lower-temperature cooling fluid (commonly ambient air or a liquid coolant) also passes through the heat exchanger to extract heat from the charge air, thereby reducing the temperature of the charge air. Because the charge air has been compressed to a high pressure, the charge air cooler must be capable of withstanding this high pressure at the elevated temperatures of the charge air to which it is exposed. For large heavy-duty engines, an especially robust structure is required.

When the engine is operating at high compression ratios, the temperature increase of the charge air due to compression can be substantial, on the order of several hundred degrees centigrade. As the hot charge air passes through the charge air cooler, it causes portions of the charge air cooler to experience substantial thermal expansion. When the structure of the charge air cooler is especially robust and stiff, other portions of the charge air cooler can resist this thermal expansion, leading to high mechanical stresses in some areas. These high mechanical stresses can reduce the useful life of the charge air cooler.

### SUMMARY

A charge air cooler can include a battery of round tubes that extend between a first header plate and a second header plate arranged at a first end and a second end, respectively, of the charge air cooler. At least one of the two header plates (i.e. either the first header plate, or the second header plate, or both the first and the second header plates) can have one thickness over a majority of the header plate and another thickness over a portion of the header plate.

The one thickness of the header plate over the majority of the header plate can be considered to be a first thickness of the header plate and the other thickness over a portion of the header plate can be considered to be a second thickness of the header plate. The second thickness can be less than the first thickness. For example, the second thickness can be between one fourth and one half of the first thickness, or can be between greater than or equal to one half of the first thickness but still less than the first thickness.

The charge air cooler can include a tank arranged at the first end and joined to the first header plate. Alternatively, or in addition, the charge air cooler can include a tank arranged at the second end and joined to the second header plate. The tank or tanks at the end or ends of the charge air cooler can be used to house or contain a liquid coolant that is circulated through the charge air cooler during operation thereof in order to extract heat from compressed charge air that is directed through the charge air cooler, thereby cooling the charge air to a desirable temperature prior to delivery of the charge air to an internal combustion engine.

The battery of round tubes can be used to convey at least some of the liquid coolant to and/or from the tank or tanks at the end or ends of the charge cooler. In at least some embodiments the charge air cooler is provided with both a first tank at the first end and joined to the first header plate, and a second tank at the second end and joined to the second header plate, and the battery of round tubes can be used to convey at least some of the liquid coolant between the first and the second tank. The battery of round tubes can convey liquid coolant between the tanks in a single pass, or in multiple passes. In the case where the liquid coolant is conveyed between the tanks in multiple passes, the battery of round tubes can be divided into two or more groupings of round tubes that are connected to the tanks in such a fashion that liquid coolant is passed successively between the tanks through the two or more groupings. Such a division of the battery of round tubes into two or more groupings can be achieved through the use of baffles that are incorporated or assembled into one or both of the tanks.

Some subset of the battery of round tubes can extend through that portion of a header plate that has the aforementioned second thickness. That subset of round tubes can include three or more round tubes. As one example, the subset of round tubes can include exactly three round tubes. As other examples, the subset of round tubes can include four, five, six, seven, or more than seven round tubes. In any event, the subset of round tubes is less than the entire number of round tubes. It can be preferable for the number of tubes within the subset to be limited to only a relative few of the total number of round tubes in the battery of round tubes. For example, the subset of round tubes can be twelve or fewer round tubes.

It can be particularly advantageous for the subset of the battery of round tubes that extend through that portion of a header plate with the second thickness to include at least some of the tubes that, due to their positioning, experience the greatest amount of mechanical stress during certain operating conditions. The differing temperature profiles that are created within the parts of the charge air cooler during operation, along with difference in coefficients of thermal expansion, can lead to round tubes in particular locations being more prone to experiencing elevated mechanical stress, which can lead to premature structural failure of the round tubes at the joint between the tube and the header plate. Reducing the thickness of the header plate at those locations can allow those particular tubes to bend more than they would be able to if the header plate were thicker. Such bending can beneficially reduce the level of mechanical stress that those particular tubes would otherwise experience, thereby extending the life of the charge air cooler.

A charge air cooler can include one or more side plates that extend between the first and second header plates. In some embodiments there is a first side plate and a second side plate that are arranged in parallel at opposing ends of the charge air cooler, with the battery of round tubes arranged between them. Edges of the first and second side plates and edges of the first and second header plates can define a charge air inlet face on one side of the charge air cooler and a charge air outlet face on an opposing side of the charge air cooler, so that charge air can be directed through the charge air cooler from the charge air inlet face to the charge air outlet face.

It can be advantageous for the portion of the header plate having the second thickness to be arranged in close proximity to (i.e. adjacent to) the charge air inlet face, as the tubes that tend to experience the greater mechanical stress tend to be those tubes that are subjected to the highest temperature charge air. The charge air enters the charge air cooler at its hottest temperature and is cooled to lower temperatures as it passes through the cooler, thereby making the tubes that are located closest to the charge air inlet face the tubes that are subjected to the highest temperature charge air.

The portion of the header plate having a second thickness can be a noncontiguous portion. For example, the portion can consist of two or more regions of the header plate that are separated from one another by regions of the header plate having the first thickness. For example, the tubes that are immediately adjacent to the side plates tend to be subjected to greater levels of mechanical stress due to differences in the thermal expansion experienced by the side plates and the round tubes during operation of the charge air cooler. The portion of the header plate having the second thickness can include one region that is adjacent to the first side plate and another region that is adjacent to the second side plate. In some, but not all, cases those regions can also be located adjacent to the charge air inlet face for the reasons previously mentioned. It can, in at least some cases, be sufficient for only those round tubes that are both close to a side plate and close to the charge air inlet face to have the greater bending freedom that results from the reduced thickness of the header plate, since those are the tubes that tend to experience the highest levels of stress.

A series of plate fins can be joined to the battery of round tubes between the first and second header plates, so that air directed through the charge air cooler (for example, from the previously described charge air inlet face to the previously described charge air outlet face) passes over the surfaces of the plate fins. These plate fins can provide turbulation of the flow of charge air, and extended surface area for the transfer of heat from the flow of charge air to liquid coolant that is flowing through the round tubes.

An air tank can be mounted to the charge air inlet face in order to direct the flow of charge air through the charge air inlet face. Alternatively, the charge air cooler can be inserted into a flow channel through which the flow of charge air is directed. As yet another alternative, the charge air cooler can be directly mounted to a source of the charge air. Similarly, an air tank can be mounted to the charge air outlet face. Alternatively, the flow of charge air can be allowed to pass directly out of the charge air cooler through the charge air cooler into a flow channel into which the charge air cooler is inserted. As yet another alternative, the charge air outlet face of the charge air cooler can be directly mounted to an engine intake manifold or other structure that is to receive the cooled charge air.

The battery of round tubes can be arranged in an array of rows and columns, with rows extending parallel to the charge air inlet and outlet faces and columns extending perpendicular to those faces. The rows and columns can be arranged to be in-line, or they can be arranged to be staggered. When the rows and columns are staggered, the tubes can be arranged so that odd numbered rows only include tubes that are in odd numbered columns and even numbered rows only include tubes that are in even numbered columns, or vice versa. Such an arrangement can provide greater turbulation of the flow of charge air passing through the charge air cooler, thereby increasing the rate of heat transfer and, consequently, the heat exchanger effectiveness.

The subset of the battery of round tubes that extend through the portion of the header plate having the second thickness can include two or more tubes from the column nearest to the first side plate and two or more tubes from the column nearest to the second side plate. The subset can also or alternatively include two or more tubes from the row nearest to the charge air inlet face. In some embodiments the subset includes exactly two tubes from the column nearest the first side plate and exactly one tube from the column adjacent to that column nearest the first side plate and exactly two tubes from the column adjacent to the second side plate and exactly one tube from the column adjacent to that column nearest the second side plate. In some embodiments the subset includes exactly three tubes from the row nearest the charge air inlet face and exactly two tubes from the next row.

Each one of the round tubes in the subset of round tubes that extend through the portion of the header plate having the second thickness can be surrounded by a collar formed from the header plate. The collars can be formed by removing material from the header plate, or can be formed in some other manner such as welding. Each collar can have a height that is equal to the difference between the first thickness of the header plate and the second thickness of the header plate, so that the total length of engagement through the header plate for those tubes is equivalent to the total length of engagement through the header plate for those tubes that are not in the subset. Alternatively, the collar can have a height that is greater than or less than the difference between the first thickness of the header plate and the second thickness of the header plate.

If such collars are present, they can be provided in the shape of annular cylinders. These annual cylinders can have a radial thickness that is at least equal to the wall thickness of the round tube that the collar surrounds. In some embodiments the radial thickness is at least equal to the wall thickness of the round tube and is no greater than two times that wall thickness.

A charge air cooler provided with side plates can have one or more coolant flow paths arranged within one or both of the side plates so that at least some of the liquid coolant is conveyed through the one or more coolant flow paths in order to cool one or both of the side plates during operation of the charge air cooler. By cooling the side plate, the difference in thermal expansion between the round tubes and the side plate can be reduced, and as a result the level of mechanical stress in at least some of those ones of the round tubes that are closest to the side plate can be reduced. In some embodiments only one of the side plates includes coolant flow paths, while in other embodiments both the first side plate and the second side plate include coolant flow paths.

At least one (and sometimes more than one) jumper tube can be provided to fluidly connect one of the tanks to one of the coolant flow paths extending through a side plate. The charge air cooler can include several such jumper tubes to connect one or both of the tanks to coolant flow paths in one or both of the side plates.

At least one (and sometimes more than one) diverter can be joined to one of the header plates and to one of the side plates to direct coolant from one of the tanks to a coolant flow path extending through the side plate. The side plate can be provided with an array of holes arranged in rows and columns, with ends of the round tubes being received into some of the holes. The diverter can include an internal fluid conduit that is connected to one or more of the holes to provide the fluid connection between the tank and the side plate. The charge air cooler can include several such diverters to connect one or both of the tanks to coolant flow paths in one or both of the side plates.

According to a first aspect of the invention there is provided a charge air cooler comprising:
a first and a second header plate respectively arranged at a first and a second end of the charge air cooler;
a first tank for a liquid coolant arranged at the first end and joined to the first header plate;
a second tank for the liquid coolant arranged at the second end and joined to the second header plate;
a first and a second side plate extending between and joined to the first and the second header plates, edges of the first and second side plates and the first and second header plates bounding a charge air inlet face and a charge air outlet face; and
a plurality of round tubes extending between and joined to the first and second header plates to convey at least some of the liquid coolant between the first tank and the second tank during operation of the charge air cooler, wherein the first header plate has a first thickness over a majority of the first header plate and a second thickness less than the first thickness over a portion of the first header plate, a subset of the plurality of round tubes extending through said portion.

The subset of the plurality of round tubes may include at least three round tubes.

The subset of the plurality of round tubes may include no more than twelve round tubes.

The subset of the plurality of round tubes may consist of seven round tubes.

The plurality of round tubes may be arranged in an array of rows and columns, the rows extending parallel to the charge air inlet and outlet faces and the columns extending perpendicular to the charge air inlet and outlet faces, wherein the subset of the plurality of round tubes may further include at least two tubes from that one of the rows nearest to the charge air inlet face, said at least two tubes including that tube of said row nearest to the first side plate and that tube of said row nearest to the second side plate.

The subset of the plurality of round tubes may include at least two tubes from that one of the columns nearest to the first side plate and at least two tubes from that one of the columns nearest to the second side plate.

Said portion may include a first portion adjacent to both the first side plate and that edge of the first header plate that bounds the charge air inlet face, and a second portion adjacent to both the second side plate and that edge of the first header plate that bounds the charge air inlet face.

Each one of the subset of the plurality of round tubes may be surrounded by a collar formed into the first header plate.

Each collar may have a height that is equal to the difference between the first thickness and the second thickness.

Each collar may be at least partially in the shape of an annular cylinder having a radial thickness that is at least equal to a wall thickness of that one of the plurality of round tubes that said collar surrounds, and may be no greater than two times that wall thickness.

The collars may be formed by removing material from said portion of the first header plate.

According to a second aspect of the invention there is provided a charge air cooler comprising:
a first and a second header plate respectively arranged at a first and a second end of the charge air cooler;
a first tank for a liquid coolant arranged at the first end and joined to the first header plate;
a second tank for the liquid coolant arranged at the second end and joined to the second header plate;
a plurality of round tubes extending between and joined to the first and second header plates to convey at least some of the liquid coolant between the first tank and the second tank during operation of the charge air cooler;
a first and a second side plate extending between and joined to the first and the second header plates, edges of the first and second side plates and the first and second header plates bounding a charge air inlet face and a charge air outlet face; and
a first coolant flow path arranged within the first side plate and a second coolant flow path arranged within the second side plate, at least some of the liquid coolant being conveyed through the first and the second coolant flow paths in order to cool the first and the second side plates during operation of the charge air cooler.

The charge air cooler may further comprise at least one jumper tube fluidly connecting at least one of the first and second tanks to at least one of the first and second coolant flow paths.

The first and second header plates may each include an array of holes arranged in rows and columns, the rows extending parallel to the charge air inlet and outlet faces and the columns extending perpendicular to the charge air inlet and outlet faces, ends of each one of the plurality of round tubes being received into some of the holes, further comprising at least one diverter joined to one of the first and second header plates and to one of the first and second side plates, the diverter having an internal fluid conduit fluidly connected to at least one of the holes to provide a fluid connection between one of the first and second tanks and one of the first and second coolant flow paths.

At least one of the first and the second side plates may be constructed of two or more pieces, the coolant flow path arranged within said one of the first and the second side plates being formed into at least one of the two or more pieces.

Said one of the first and the second side plates may be constructed of exactly two pieces.

Said one of the first and the second side plates may be constructed of five or more pieces arranged in a stack, the stack being bounded by a first and a second one of the pieces, the coolant flow path arranged within said one of the first and the second side plates being formed into third, fourth, and fifth ones of the pieces located between the first one of the pieces and the second one of the pieces.

Said one of the first and the second side plates may include a plurality of structural connection blocks arranged in aligned apertures of the third, fourth, and fifth ones of the pieces to structurally connect said one of the first and second side plates to the first and the second header plates.

Each one of the five or more pieces may be of equal thickness.

The first coolant flow path and the second coolant flow path may each include a serpentine flow path.

### BRIEF DESCRIPTION THE DRAWINGS

FIG. 1 is a perspective view of a charge air cooler according to an embodiment of the invention.
FIG. 2 is a perspective view of a portion of the charge air cooler of FIG. 1.
FIG. 3 is a plan view of a portion of a header plate for use in the charge air cooler of FIG. 1.
FIG. 4 is a plan view of another portion of a header plate for use in the charge air cooler of FIG. 1.
FIG. 5 is a section view through a tube to header joint of the charge air cooler of FIG. 1.
FIG. 6 is a perspective view of a charge air cooler according to some embodiments of the invention.
FIG. 7 is a partially exploded perspective view of a portion of the charge air cooler of FIG. 6.
FIG. 8 is a perspective view of a portion of a charge air cooler according to some embodiments of the invention.
FIG. 9 is a sectioned perspective view of a diverter for use in the charge air cooler of FIG. 8.
FIG. 10 is an exploded perspective view of a side plate for use in a charge air cooler according to some embodiments of the invention.

### DETAILED DESCRIPTION

Before any embodiments of the invention are explained in detail, it is to be understood that the invention is not limited in its application to the details of construction and the arrangement of components set forth in the following description or illustrated in the accompanying drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

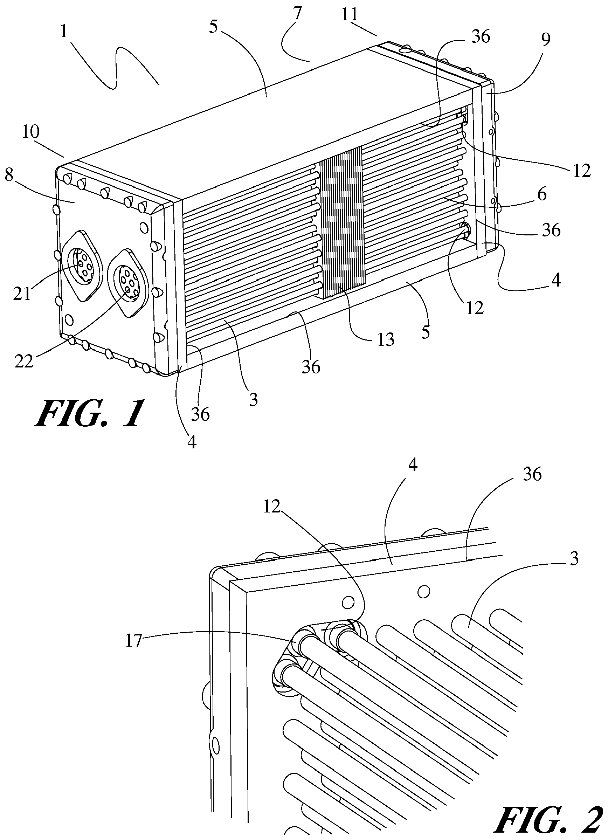

A charge air cooler 1, depicted in FIG. 1, can be used as part of an internal combustion engine system to cool a flow of compressed air prior to delivery of that flow of air to the engine inlet manifold. The charge air cooler 1 operates by directing the flow of compressed air through gaps within a stack of narrowly spaced plate fins 13. The plate fins 13 provide a large surface area for the flow of air to pass over, so that thermal energy within the charge air can be transferred to the lower-temperature plate fins. The plate fins 13 can be provided with flow turbulation features to further increase the rate at which heat is transferred to the plate fin surfaces, or can be plain and without such turbulation features. In order to provide effective heat transfer, the plate fins 13 are preferably constructed of a metal alloy, such as an alloy of copper, brass, aluminum, steel, stainless steel, or a combination of these or other metals.

A battery of round tubes 3 extend through the stack of plate fins 13. During operation, a liquid coolant is transmitted through those tubes 3 in order to maintain the temperature of the tubes 3 and the plate fins 13 at a temperature lower than that of the flow of charge air, thereby driving the transfer of heat from the charge air to the liquid coolant. In order to effect this transfer of heat in an efficient manner, the outer surfaces of the round tubes 3 are joined to the plate fins 13, such as by brazing, mechanical expansion, hydrostatic expansion, or otherwise. The round tubes 3 are also preferably constructed of a metal alloy, which could be the same alloy or type of alloy as the plate fins 13 or a different alloy or type of alloy. By way of example, the plate fins 13 might be constructed of a copper alloy and the round tubes 3 might be constructed of a brass alloy.

The round tubes 3 are terminated at header plates 4 that are arranged at opposing ends 10 and 11 of the charge air cooler 1. Note that, for ease of illustration, only a select few of the plate fins 13 are depicted in FIG. 1, and the plate fins have been removed entirely in other figures. It should be understood that, in general, the stack of plate fins 13 extends the full distance between the opposing header plates 4.

A coolant tank 8 for the liquid coolant is arranged at a first end 10 of the charge air cooler 1, and is sealingly joined to the header plate 4 at that end, by mechanical fasteners for example. The tank 8 can be, for example, a cast part or an injection-molded part. Similarly, a tank 9 is arranged at the opposite end 11 of the charge air cooler 1 and is sealingly joined to the header plate 4 at that end in similar fashion. In the embodiment of FIG. 1, the tank 8 includes both an inlet port 21 for the coolant and an outlet port 22. The coolant therefore would make an even number of flow passes (e.g. two, four, six, etc.) through the tubes 3 in order to absorb heat from the charge air. In other embodiments, one of the ports 21, 22 could be located on the tank 9, so that the coolant would make an odd number of flow passes (e.g. one, three, five, etc.) through the tubes 3. Baffles can be incorporated into the tanks 8, 9 to create the multiple flow passes as needed.

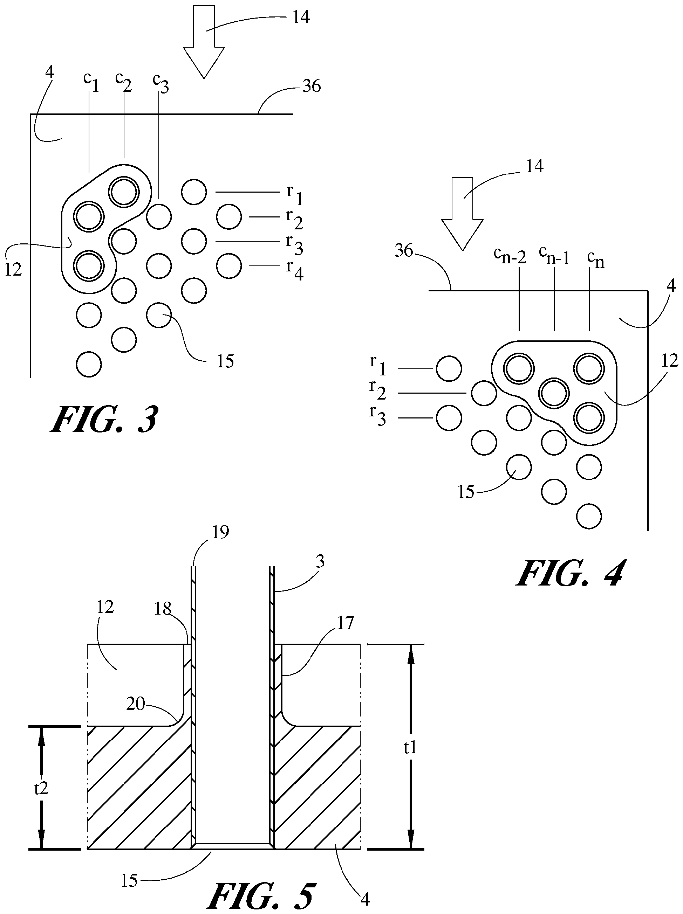

In order to receive the ends of the round tubes 3 in a fluid-tight fashion, the header plates 4 are provided with a series of round holes 15, a representative selection of which can be seen in FIGs. 3-4. The header plates 4 can be formed from relatively thick metal plates, and the holes 15 can be readily provided therein by drilling or other similar machining operations. The ends of the round tubes 3 are joined to the header plates 4 in order to create a leak-free joint, such as by mechanical expansion or welding or other known joining operations.

In order to provide structural rigidity to the charge air cooler 1, a pair of side plates 5 extend between the header plates 4, in parallel with the axial direction of the round tubes 3. The side plates 5 are arranged at opposing sides of the cooler and are separated from each other by the plate fins 13. The side plates 5 can be formed from relatively thick metal plates so that, in combination with the header plates 4, a robust mechanical structure is provided for the charge air cooler 1. The header plates 4 are preferably joined to the side plates 5 using mechanical fasteners, although alternative joining methods can be used instead.

Edges 36 of the side plates 5 and the header plates 4 combine to bound rectangular openings at opposing sides of the charge air cooler 1. One of the rectangular openings defines a charge air inlet face 6 of the charge air cooler 1, through which the flow of compressed charge air can be directed into the cooler. The other rectangular opening defines a charge air outlet face 7 through which the compressed charge air can exit the cooler after having been reduced in temperature.

The holes 15 are arranged in a rectangular array of rows and columns and, consequently, the round tubes 3 whose ends are received in those holes 15 are arranged in rows and columns as well. As shown in FIGs. 3 and 4, the rows (indicated by r₁, r₂, r₃, r₄, etc.) extend parallel to the charge air inlet face 6, so that the flow of charge air 14 passing through the charge air cooler 1 encounters the rows of round tubes 3 sequentially, e.g. first passing over the round tubes of the row r₁, next passing over the round tubes of the row r₂, etc. In contrast, the columns (indicated by c₁, c₂, c₃, ... cₙ₋₂, cₙ₋₁, cₙ) extend perpendicular to the charge air inlet face 6, so that the flow of charge air 14 passing through the charge air cooler 1 encounters all the columns of round tubes 3 at the same time. Although the side plates 5 are not shown in FIGs. 3 and 4, it should be understood that one of the side plates 5 is arranged adjacent to the first column c₁ and the other side plate 5 is arranged adjacent to the last column cₙ.

The rows and columns of the holes 15 can be staggered, as shown in FIGs. 3 and 4, so that sequential holes in each row are only present in every other column and, likewise, sequential holes in each column are only present in every other row. Such an arrangement can provide increased heat transfer by providing a higher packing density of tubes within a given heat exchanger size, as well as by causing increased turbulation of the air flow through the heat exchanger. In other embodiments, the holes 15 can be arranged in an unstaggered array such that sequential holes in each row are present in each column, and vice versa.

As best seen in FIGs. 3-5, at least one (and preferably both) of the header plates 4 has a first thickness t1 that extends over a majority of the header plate, and a second thickness t2 that is less than the thickness t1 over a portion 12 of the header plate. The portion 12 preferably extends over only a small percentage of the total surface area of the header plate, such as between one percent and five percent of the total surface area of the header plate. A subset of the holes 15 of the header plate 4 are arranged in that portion 12 of the header plate, so that a corresponding subset of the tubes 3 extend through that portion 12.

Each of the holes 15 that belong to the subset of the holes 15 arranged in the portion 12 are provided with a collar 17 that is formed into the header plate 15, so that those tubes of the subset of tubes 3 that extend through the portion 12 are each surrounded by one of the collars 17 over a portion of the tube length. These collars 17 allow the leak-tight joint between the tubes 3 and the header plate 4 to extends over a longer depth than merely the thickness t2. Each of the collars 17 has, as shown in the cross-sectional view of FIG. 5 of the exemplary embodiment, a height that is equal to the difference between the first thickness t1 and the second thickness t2. This allows for easy forming of the collars 17 by machining the portion 12 as one or more pockets within the header plate 4. Alternatively, however, the height of the collars 17 can be greater than or less than this difference. The collars 17 can also be produce through alternative means, such as by welding in cylindrically shaped sections. In some cases the collars 17 can be excluded entirely.

It should be observed that the portion 12 need not occupy a single continuous area of the header plate 4. As can be seen in the exemplary embodiment, particularly in FIGs. 3 and 4, the portion 12 includes a first region that is arranged adjacent to one of the side plates 5 (e.g. the side plate adjacent to the first column ci) and a second region that is arranged adjacent to the other one of the side plates 5 (e.g. the side plate adjacent to the last column cₙ). Arranging the portion 12 to be adjacent to both side plates 5 and adjacent to the air inlet face 6 provides certain advantages, as will be now explained.

During operation of the heat exchanger, the tubes 3 and fins 13 are heated by the hot compressed air flowing over them. In a highly turbocharged engine, the temperature of the charge air can be in excess of 300°C, which causes substantial thermal expansion of the tubes 3. The side plates 5, which are typically needed to provide the requisite structural rigidity of the charge air cooler, experiences less thermal expansion and, due to its inherent stiffness, is able to restrict the thermal expansion of the tubes 3 located nearest the side plate, resulting in those tubes experiencing high levels of mechanical stress during operation. These high stress levels can lead to structural failure, especially when the charge air cooler experiences repeated thermal cycling.

The inventors have found that these high stress levels can be substantially ameliorated by having the header thickness be reduced for those tubes that would otherwise experience the greatest levels of stress. The particular tubes that are most susceptible to the fatigue caused by these high levels of stress are the ones that are both close to the air inlet face (i.e. the tubes that encounter the hottest air) and close to the side plates (i.e. the tubes whose thermal expansion is the most restricted by the side plates). By reducing the thickness of the header plate 4 (e.g. from a thickness t1 to a thickness t2) in the region of that subset of tubes, those tubes are allowed to bend to a greater degree in order to accommodate the resistance to their thermal expansion. The inventors have found that the level of stress in those particular tubes can be reduced by 30% or more by reducing the thickness of the header plate 4 around only a few of the tubes 3, as depicted.

It can be particularly beneficial for the portion 12 of the header plate 4 with a reduced header plate thickness to be located at both the corner of the header plate 4 that corresponds with both corners where the air inlet face 6 meets the side plates 5. In some embodiments, however, it may be sufficient to locate that portion 12 at only one of such corners.

In some particular embodiments, the stress reduction benefits can be achieved at one of the corners of the header plate by having three or more of the tubes 3 that are located closest to that corner included in the subset of tubes that are arranged within the reduced header thickness portion 12. In some embodiments, such as the exemplary embodiment of Fig. 1, the subset of tubes consists of exactly seven tubes, with three tubes located closest to a first corner of the header plate 4 and four tubes located closest to a second corner of the heard plate 4, as depicted in Figs. 3 and 4. In other embodiments a greater number of tubes are included in the subset. The stress-reducing effects generally do not increase, however, by inclusion of tubes that are too far removed from those corners, and in some cases, no further benefits are expected when the subset of tubes increase in number beyond 12.

The inventors have found that, in at least some cases, substantial stress reductions are experienced when the subset of tubes includes at least two tubes from the row of tubes r₁, i.e. from the row of tubes closes to the air inlet face 6. This would preferably include the tubes of that row that are closest to the side plates 5. As can be observed in FIG. 3, such a tube need not be located in the column of tubes nearest the side plate 5 (e.g. the column c₁) when the tubes are arranged in a staggered array. In such an arrangement, the tube of the row r₁ closest to the side plate 5 on that side is actually located in the second column c₂. With such an array, it may be sufficient for that tube (the tube in row r₁ and in column c₂) to be the only tube on that end of row r₁ to be included in the subset. At the other end of row r_{1,} a tube is located in the end column (the column cₙ), as can be seen in FIG. 4. With such an arrangement, it can be beneficial for the two tubes at the end of that row (the tubes in columns cₙ and cₙ₋₂) to both be included in the subset. In other embodiments, where there is no tube in that row in the furthest column cₙ, it may be sufficient for only the outermost tube in the row r₁ to be included.

The inventors have further found that, in at least some cases, substantial stress reductions are experienced when the subset of tubes includes at least two tubes from each of the columns closest to the side plates 5, i.e. at least two tubes from the column c₁ and at least two tubes from the column cₙ. As can be seen in FIGs. 3 and 4, when the array of tubes is a staggered array, the two tubes of such a column that are closest to the air inlet face 6 can be the tubes of that column in the rows r₁ and r₃ (as shown in FIG. 4) or the tubes of that column in the rows r₂ and r₄ (as shown in FIG. 3). In an unstaggered array, it would be the tubes in the rows r₁ and r₂. As can be further seen in FIG. 4, the subset of tubes can also include one or more tubes that are neither in the row of tubes closest to the air inlet face 6 nor in the columns of tubes closest to the side plates 5, for example the tube located in row r₂ and in column cₙ₋₁.

As mentioned previously, it can be beneficial for the tubes within the portion 12 to be surrounded by a collar 17 in order to increase the depth of the joint between the tubes and the header plate. In order to allow for the required bending flexibility of the tubes in reduced header thickness portion 12, it is beneficial for the collars 17 to have a thickness 18 that is at least equal to the wall thickness 19 of the tubes 3 themselves, but that is no greater than two times that wall thickness 19. Furthermore, the inclusion of a fillet radius 20 at the base of the collars 17 can reduce the occurrence of crack formation at the intersection of the collars 17 and the planar surface of the portion 12 of the header plate.

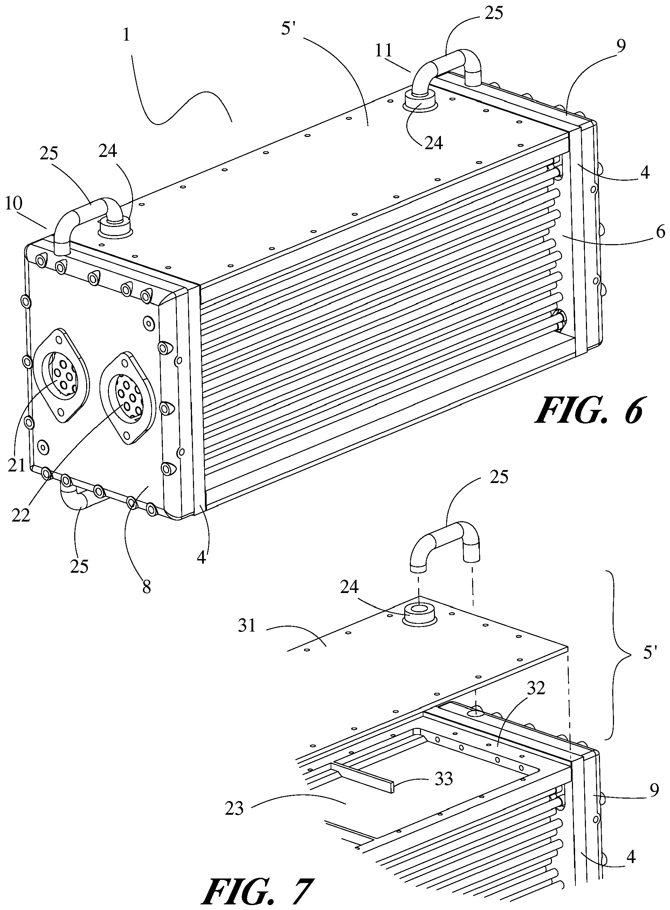

The stresses that are experienced in the tubes due to the differential thermal expansion between the tubes and the side plates can additionally or alternatively be reduced by directing a portion of the coolant through one or both of the side plates. FIGs. 6-10 depict several embodiments of a charge air cooler 1 that includes such a feature. It should be understood that the cooled side plates can be combined together with a header plate having a reduced thickness in some portions, but can also be used to reduce the tube stresses by itself.

FIGs. 6 and 7 depict a charge air cooler 1 with cooled side plates 5'. The cooled side plates 5' are of a multi-part construction, having a main plate 32 and a cap plate 31. The main plate 32 is of relatively thick construction, and includes a pocket that is machined or otherwise formed into it to define a coolant flow path 23 between the opposing ends 10, 11 of the charge air cooler 1. The cap plate 31 is joined to the main plate 32 (such as by mechanical fasteners) to close off the pocket. A gasket (not shown) can be provided to create a fluid seal between the parts 31, 32 in order to prevent leakage of coolant from the side plate 5'. The two side plates 5' can be of substantially similar construction, so that a first coolant flow path 23 is provided within one of the side plates 5' and a second coolant flow path 23 is provided within the other one of the side plates 5', the two coolant flow paths 23 being hydraulically in parallel with one another.

Jumper tubes 25 are provided to direct coolant between the flow paths 23 and the tanks 8, 9. The jumper tubes 25 can be formed metal tubes that are joined at one end to the tank 8 or 9 and are joined at the other end to the cap plate 31. A fitting 24 can be assembled to the cap plate 31 to receive the end of the jumper tube 25.

In order to provide for more uniform cooling of the side plate 5', baffles 33 can be arranged within the main plate 32 so that the coolant flow path 23 is of a serpentine character. The baffles 33 can be integrally formed into the main plate 32 during the machining of the pocket, or can be separate pieces that are joined to the main plate 32.

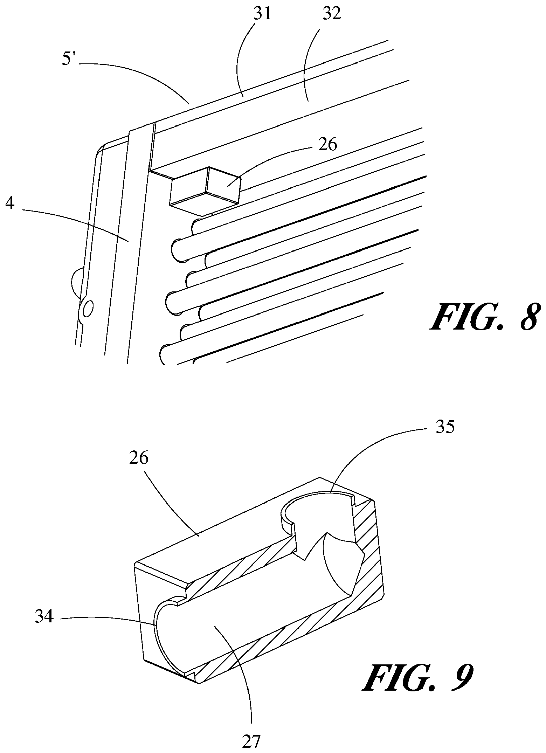

In an alternative embodiment, depicted in FIG. 8, the need for the jumper tubes 25 is dispensed with through the addition of a diverter 26 that is joined to the header plate 4 and to the side plate 5' in order to direct coolant between the coolant flow path 23 and the coolant tank 8 or 9. The diverter 26, depicted in more detail in FIG. 9, is a machined metal block having an internal fluid conduit 27 extending therethrough,. The fluid conduit 27 extends between circular ports 34, 35 arranged on two adjacent, perpendicularly oriented faces of the diverter 26. The face from which the port 35 extends is joined to the external face of the main plate 32 (e.g. the face opposite the cap plate 31) and the port 35 is received into an aperture extending through that face of the main plate to fluidly connect the internal fluid conduit 27 to the coolant flow path 23 within the side plate 5'. The face from which the port 34 extends is joined to a face of the header plate 4, with the port 34 received into one of the holes 15 of the header plate 4, thereby replacing the tube 3 that would otherwise have been received into that hole 15. A similar diverter 26 is provided at the opposite end of the charge air cooler 1 and is received into the corresponding hole 15 of the header plate 4 at that end.

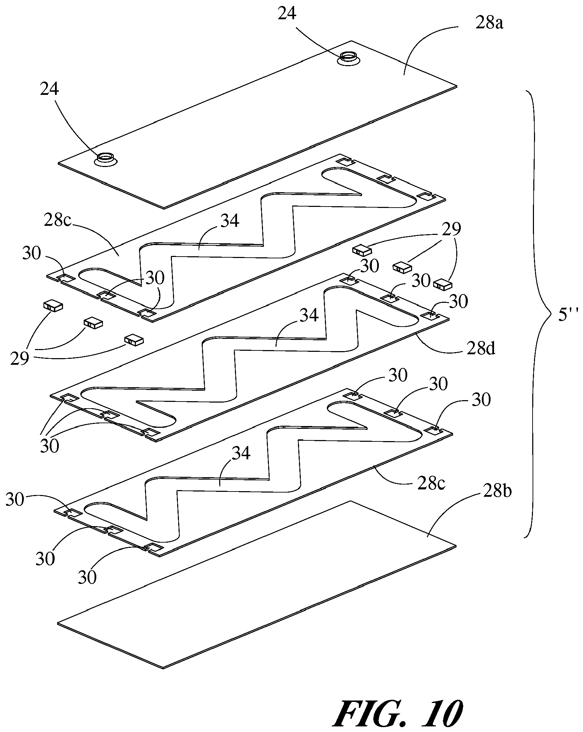

An alternative version of a side plate 5" is depicted in an exploded view in FIG. 10. In place of a single main plate and cap plate, the side plate 5" is constructed of several relatively thin plates 28a, 28b, 28c arranged in a stack. A cap plate 28a is arranged at one end of the stack, and can be provide with the fittings 24 described previously. Another cap plate 28b is provided at the opposite end of the stack. Three additional plates are provided between the cap plates 28a, 28b. Two plates 28c are each arranged adjacent to one of the cap plates 28a and 28b. The two plates 28c are separated from one another by another plate 28d arranged at the middle of the stack. The plates 28c and 28d are all provided with a zig-zag opening 34, with the opening 34 of the middle plate 28d being a mirror image of the openings of the plates 28c. The opening 34 of the three plates combine to define the coolant flow path 23 extending through the side plate. This alternative allows for the use of relatively thin plates, and allows for the coolant flow path to be stamped into the plates instead of being machined as a pocket into a thicker plate.

In order to allow for attachment of the side plate 5" to the header plates 4, the plates 28c and 28d are provided with aligned rectangular apertures 30. Structural connection blocks 29 are received into the aligned apertures 30, and are provided with a threaded hole into which a mechanical fastener that extends through the side plate can be received in order to structurally join the side plate 5" to the header plate 4. Each of the apertures 30 can be provided with an edge opening to allow for unobstructed access to the threaded hole of the structural connection block 29. The plates that make up the side plate 5" can be assembled into a stack with the structural connection blocks 29, and can be edge-welded in order to form the completed side plate 5". In place of the fitting blocks 24, diverters 26 described previously can be attached to the cap plate 28b.

Various alternatives to the certain features and elements of the present invention are described with reference to specific embodiments of the present invention. With the exception of features, elements, and manners of operation that are mutually exclusive of or are inconsistent with each embodiment described above, it should be noted that the alternative features, elements, and manners of operation described with reference to one particular embodiment are applicable to the other embodiments.

The embodiments described above and illustrated in the figures are presented by way of example only and are not intended as a limitation upon the concepts and principles of the present invention. As such, it will be appreciated by one having ordinary skill in the art that various changes in the elements and their configuration and arrangement are possible without departing from the spirit and scope of the present invention.

## Claims

1. A charge air cooler comprising:
a first and a second header plate respectively arranged at a first and a second end of the charge air cooler;
a first tank for a liquid coolant arranged at the first end and joined to the first header plate;
a second tank for the liquid coolant arranged at the second end and joined to the second header plate;
a first and a second side plate extending between and joined to the first and the second header plates, edges of the first and second side plates and the first and second header plates bounding a charge air inlet face and a charge air outlet face; and
a plurality of round tubes extending between and joined to the first and second header plates to convey at least some of the liquid coolant between the first tank and the second tank during operation of the charge air cooler, wherein the first header plate has a first thickness over a majority of the first header plate and a second thickness less than the first thickness over a portion of the first header plate, a subset of the plurality of round tubes extending through said portion.

2. The charge air cooler of claim 1, wherein the subset of the plurality of round tubes includes at least three round tubes.

3. The charge air cooler of claims 1 or 2, wherein the subset of the plurality of round tubes includes no more than twelve round tubes.

4. The charge air cooler of any preceding claim, wherein the subset of the plurality of round tubes consists of seven round tubes.

5. The charge air cooler of claim 1, wherein the plurality of round tubes are arranged in an array of rows and columns, the rows extending parallel to the charge air inlet and outlet faces and the columns extending perpendicular to the charge air inlet and outlet faces, wherein the subset of the plurality of round tubes further includes at least two tubes from that one of the rows nearest to the charge air inlet face, said at least two tubes including that tube of said row nearest to the first side plate and that tube of said row nearest to the second side plate; optionally
wherein the subset of the plurality of round tubes includes at least two tubes from that one of the columns nearest to the first side plate and at least two tubes from that one of the columns nearest to the second side plate.

6. The charge air cooler of any preceding claim, wherein said portion includes a first portion adjacent to both the first side plate and that edge of the first header plate that bounds the charge air inlet face, and a second portion adjacent to both the second side plate and that edge of the first header plate that bounds the charge air inlet face.

7. The charge air cooler of any preceding claim, wherein each one of the subset of the plurality of round tubes is surrounded by a collar formed into the first header plate.

8. The charge air cooler of claim 7, wherein each collar has a height that is equal to the difference between the first thickness and the second thickness; and/or
wherein each collar is at least partially in the shape of an annular cylinder having a radial thickness that is at least equal to a wall thickness of that one of the plurality of round tubes that said collar surrounds, and is no greater than two times that wall thickness; and/or
wherein the collars are formed by removing material from said portion of the first header plate.

9. A charge air cooler comprising:
a first and a second header plate respectively arranged at a first and a second end of the charge air cooler;
a first tank for a liquid coolant arranged at the first end and joined to the first header plate;
a second tank for the liquid coolant arranged at the second end and joined to the second header plate;
a plurality of round tubes extending between and joined to the first and second header plates to convey at least some of the liquid coolant between the first tank and the second tank during operation of the charge air cooler;
a first and a second side plate extending between and joined to the first and the second header plates, edges of the first and second side plates and the first and second header plates bounding a charge air inlet face and a charge air outlet face; and
a first coolant flow path arranged within the first side plate and a second coolant flow path arranged within the second side plate, at least some of the liquid coolant being conveyed through the first and the second coolant flow paths in order to cool the first and the second side plates during operation of the charge air cooler.

10. The charge air cooler of claim 9, further comprising at least one jumper tube fluidly connecting at least one of the first and second tanks to at least one of the first and second coolant flow paths; and/or
wherein the first coolant flow path and the second coolant flow path each include a serpentine flow path.

11. The charge air cooler of either of claims 9 or 10, wherein the first and second header plates each include an array of holes arranged in rows and columns, the rows extending parallel to the charge air inlet and outlet faces and the columns extending perpendicular to the charge air inlet and outlet faces, ends of each one of the plurality of round tubes being received into some of the holes, further comprising at least one diverter joined to one of the first and second header plates and to one of the first and second side plates, the diverter having an internal fluid conduit fluidly connected to at least one of the holes to provide a fluid connection between one of the first and second tanks and one of the first and second coolant flow paths.

12. The charge air cooler of claim 9, wherein at least one of the first and the second side plates is constructed of two or more pieces, the coolant flow path arranged within said one of the first and the second side plates being formed into at least one of the two or more pieces.

13. The charge air cooler of claim 12, wherein said one of the first and the second side plates is constructed of exactly two pieces.

14. The charge air cooler of claim 12, wherein said one of the first and the second side plates is constructed of five or more pieces arranged in a stack, the stack being bounded by a first and a second one of the pieces, the coolant flow path arranged within said one of the first and the second side plates being formed into third, fourth, and fifth ones of the pieces located between the first one of the pieces and the second one of the pieces.

15. The charge air cooler of claim 14, wherein said one of the first and the second side plates includes a plurality of structural connection blocks arranged in aligned apertures of the third, fourth, and fifth ones of the pieces to structurally connect said one of the first and second side plates to the first and the second header plates; and/or
wherein each one of the five or more pieces are of equal thickness.
